# EUROPEAN PATENT SPECIFICATION

(11) **EP 0 336 558 B1**
(45) Date of publication and mention of the grant of the patent: **18.08.1993**
(21) Application number: 89302029.7
(22) Date of filing: 01.03.1989
(51) Int. Cl.: C07F 9/32

(54) **Novel organic phosphorous derivatives and manufacturing processes therefor**
Organische Phosphorverbindungen und Verfahren zu ihrer Herstellung
Composés organiques du phosphore et procédé de leur préparation

(30) Priority: 03.03.1988 JP 50491/88
(43) Date of publication of application: 11.10.1989
(73) Proprietor: NISSAN CHEMICAL INDUSTRIES LTD., Chiyoda-ku Tokyo (JP); Agency of Industrial Science and Technology of Ministry of International Trade and Industry, Chiyoda-ku Tokyo (JP)
(72) Inventor: Tanaka, Masato, Tsukuba City Ibaragi Prefecture (JP); Sakakura, Toshiyasu, Tsukuba City Ibaragi Prefecture (JP); Takigawa, Shinichiro Nissan Chem. Ind. Ltd., Funabashi City Chiba Prefecture (JP)
(74) Representative: Quest, Barry

(56) References cited:
- EP-A- 0 009 022
- EP-A- 0 292 918
- DE-A- 2 516 343
- US-A- 4 168 963
- Patent Abstracts of Japan, vol. 4, no.101 (C-19)(583), 19 July 1980.

## Description

The invention relates to novel methyl-3,3'-di-alkoxypropylphosphinic acid derivatives, each of which is useful as an intermediate for manufacturing an effective component of a herbicide and novel processes for manufacturing of said novel compounds as well as of 2-amino-4-(alkoxymethylphosphino) butyric acid derivatives and/or ester derivatives thereof.

As for the manufacture or the known methyl-3,3'-dialkoxypropylphosphinic acid esters, e.g. JP-A 64596/1980 discloses a process as shown below; 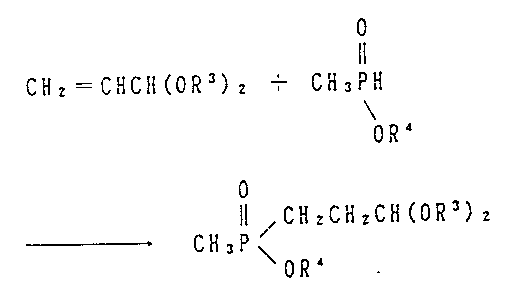
in which R³ and R⁴ respectively means a lower alkyl group.

Since said process uses a starting material unstable and industrially unavailable, however, this has not been realized in the industrial scale.

A further process as follows is disclosed in "Roczuuiki Chemii" Vol.49, page 2127 (1975); 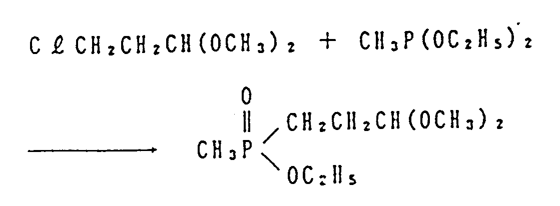
The reaction called Arbusow Rearrangement is, however, not satisfactory by reason of that not only the starting materials are not readily available but also halogenated alkyl is by-produced so as to cause an environmental problem.

As for the manufacture of 2-amino-4-(alkoxymethylphosphinyl) butyric acid derivatives, "Chemical Abstracts" Vol.92, 181652g discloses the process as follows; 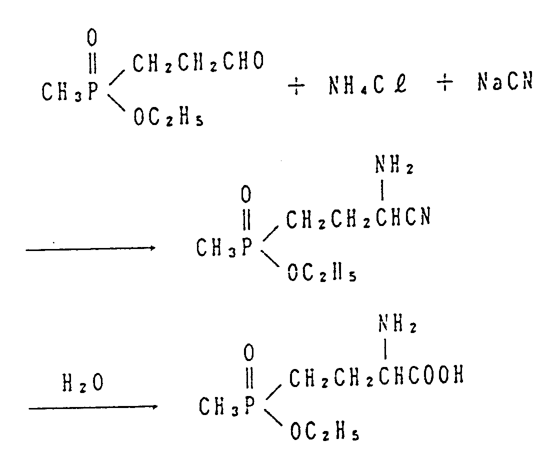
This process is also not industrially useful in view of that not only the aldehyde as the material is unstable but also the poisonous cyan compound must be used in a larger amount and also a huge amount of waste water in problem must be processed.

JP-A 131993/1983 discloses the manufacturing process as shown in the following reaction formula; 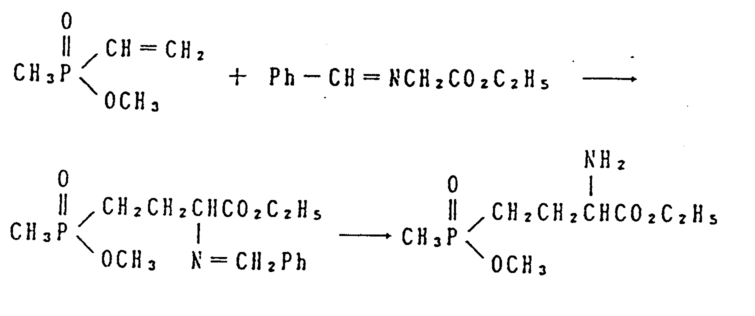
This process can not be said industrially useful since the material is too expensive.

EP-A-0 009 022 discloses preparation of methyl-3,3'-dialkoxypropylphosphinic acid esters by the reaction of a corresponding dialkyl methylphosphonite, CH₃-P(OR₁)₂, with acrolein and an alcohol, R₂OH. The further conversion of this intermediate into herbicidal 2-amino-4-methylphosphinobutyric acid comprises the steps of acid induced deacetalization to produce an ester of 3-oxopropylmethylphosphinic acid and subjecting this aldehyde to the Strecker's synthesis.

US-A- 4 168 963 discloses preparation of 2-amino-4-methylphosphinobutyric acid and derivatives thereof
(a) by a process which is similar to that described in EP-A-0 009 022;
(b) by nucleophilic substitution of halogenoethylphosphinic acid esters with acetaminomalonic acid esters in the presence of a strong base and subsequent decarboxylation of the resulting intermediate product and
(c) by adding acetylaminomalonic acid esters to vinylphosphonic acid esters in the presence of a strong base, and subsequent saponification of the adduct.

An object of the invention is, thus, to provide novel methyl-3'-dialkoxypropylphosphinic acid derivatives as intermediate for manufacturing herbicidal compounds and novel processes for manufacturing thereof, as well as novel processes for manufacturing 2-amino-4-(alkoxymethylphosphino) butyric acid derivatives and/or ester derivatives thereof which are also intermediates for manufacturing herbicidal compounds, without disadvantages or defects as referred to above.

Another object of the invention is to manufacture said intermediates from readily available and inexpensive materials, with using a less amount of catalyst, in a shorter reaction time and a higher yield.

The other objects of the invention and advantages to be attained according thereto are appreciated by those skilled in the art by studying following description of the invention.

The inventors have tried various experiments in order to attain said objects to find out that the oxo synthesis or hydroformylation of readily available and inexpensive compound (II) 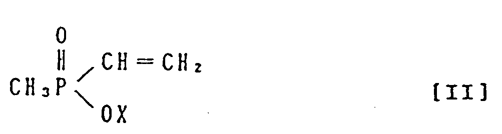
in which X means a halo-alkyl group having from 1 to 4 carbon atoms or a phenyl group,
and the amido-carbonylation of the above compound (II) or a novel compound (I) 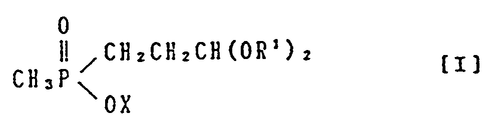
in which R¹ means an all group of 1-10 carbon atoms and X means the above can readily produce the objective compounds of the invention which are intermediates for the herbicidal compounds.

A subject of the invention is, thus, the novel compounds, methyl-3,3'-dialkoxypropylphosphinic acid derivatives (I).

Another subject thereof is the process for manufacturing thereof by reacting the compound (II), a compound of R¹-OH(III)(R¹ means the above), hydrogen and carbon monoxide, in the presence of a catalyst comprising an VIII group metal in the periodic table

A still other subject is the process for manufacturing 2-amino-4-(alkoxymethylphosphino) butyrate derivatives (V) 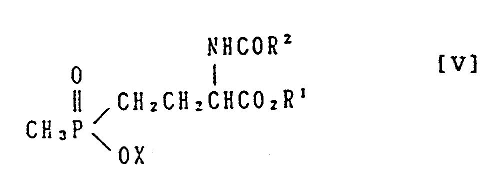
in which R¹ means the above, R² means an alkyl or phenyl group, the latter of which may be substituted, and X means the above, by reacting the novel compound (I), the compound of NH₂COR² (IV) (R² means the above) and carbon monoxide or hydrogen and carbon monoxide in the presence of the catalyst referred to above.

A still further subject is the process for manufacturing 2-amino-4-(alkoxymethylphosphino) butyrate derivatives (V) and/or the corresponding butyric acid derivative (VI) 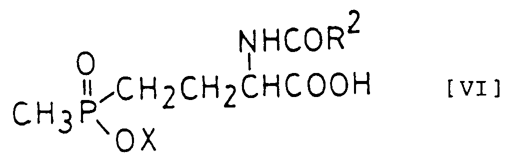
wherein R² and X mean the above, by reacting the above compound (II), the above compound (III), the above compound (IV), hydrogen and carbon monoxide in the presence of the above catalyst.

The aboves are shown by following reaction formulae;
(A) Oxo Synthesis 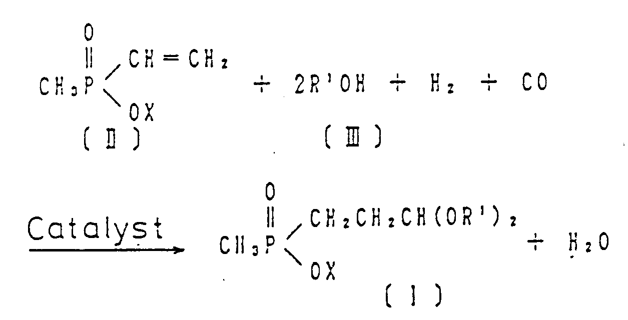
(B) Amido-Carbonylation 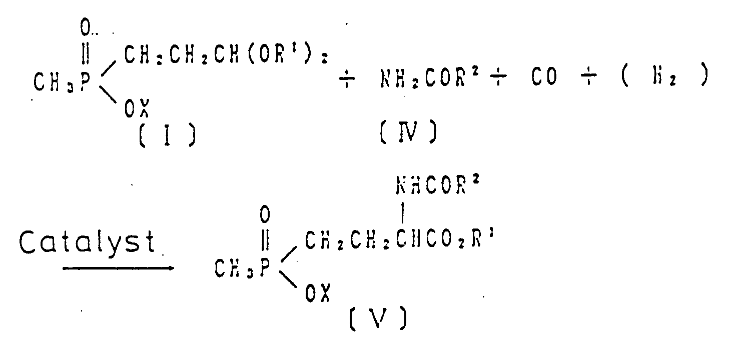
(C) Parallel Amido-Carbonylations 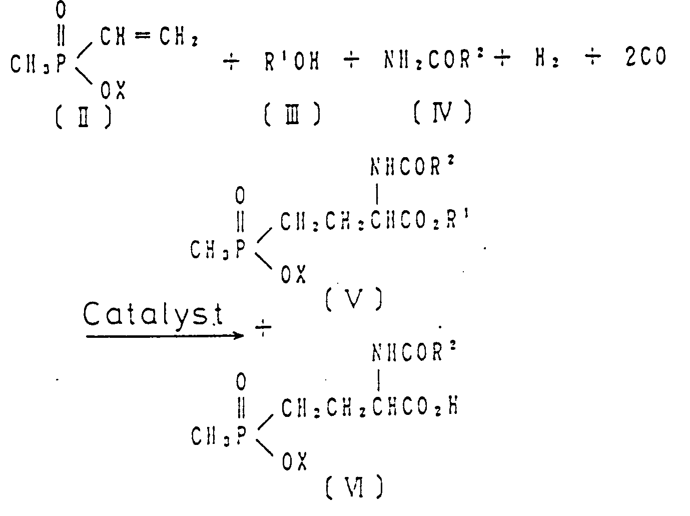
The substituent R¹ is an alkyl group of 1 - 10 carbon atoms such as methyl, ethyl, propyl, isopropyl, normal butyl, isobutyl, tertiary butyl, hexyl and heptyl,, among which methyl is particularly preferable.

The substituent X is a halo- alkyl group having from 1 to 4 carbon atoms, such as halogenomethyl, halogenoethyl, halogenopropyl and halogenobutyl; a phenyl group. As a halogen, chlorine, fluorine, iodine and bromine are taken into consideration. Methyl, ethyl, 1-chloroethyl and 2-chloroethyl are particularly preferable.

The substituent R² is hydrogen, an alkyl group having up to 12 carbon atoms, such as methyl, ethyl, normal propyl, isopropyl, normal butyl, isobutyl, tertiary butyl and dodecyl; phenyl, methyl substituted phenyl, trimethyl substituted phenyl, butyl substituted phenyl, methoxy substituted phenyl, cyano substituted phenyl, fluorine substituted phenyl, fluorine disubstituted phenyl, chlorine-fluorine substituted phenyl, chlorine substituted phenyl, chlorine disubstituted phenyl, methyl-chlorine substituted phenyl, bromine substituted phenyl, benzoyl substituted phenyl, methyl substituted phenylbutyl, naphthyl or benzyl, among which methyl and phenyl are particularly preferable.

A transition metal belonging to VIII group in the periodic table such as cobalt, rhodium, iron, nickle, ruthenium, osmium, iridium and platinum is used as the catalyst. Carbonyl compounds thereof, particularly of cobalt and rhodium are preferably used, among of which hydrocobalt carbonyl, dicobalt octacarbonyl, tetradirhodium-carbonyl and hexarhodium-hexadecacarbonyl are particularly preferable, which may be used alone or as a mixture.

There is no critical limitation on the amount of the used catalyst, but in case where e.g. a cobalt compound is used in the reaction formulae (A), (B) and (C) referred to above, the amount ranging from 0.01 to 10 gram-atoms as cobalt metal in relation to 100 moles of the compound (II) or (I) is sufficient. In order to stabilize the catalyst a phosphine compound such as trimethylphosphine, triethylphosphine, tributylphosphine and triphenylphosphine may be used.

In the reactions (A) and (C), the compound (III) is used in the amount of 1 - 50 moles, preferably 1 - 10 moles in relation to 1 mole of the compound (II).

In the reactions (B) and (C), the compound (IV) is used in the amount of 1 - 10 moles, preferably 1 - 3 moles in relation to 1 mole of the compound (I).

In the reactions (A) and (C), carbon monoxide is generally used in the amount of 0.1 - 10 moles, preferably 0.5 - 5 moles in relation to 1 mole of hydrogen.

The reaction pressure is in the range of 9.81 x 10⁵Pa to 3.9 x 10⁷Pa (10 - 400 kg/cm²), preferably 3.9 x 10⁶Pa to 2.4 x 10⁷Pa (40 - 250 kg/cm²) in any of the reactions (A), (B), and (C).

The reaction temperature is in the range of 50 - 250°C, preferably 60-150°C in any of the reactions (A), (B) and (C).

The reactions (A), (B) and (C) are progressed without any solvent, but a solvent may be used, which is e.g. an ether such as diethyl ether, tetrahydrofuran, dioxane, an ester such as ethyl acetate and methyl acetate, a ketone such as acetone, methyl ethyl ketone, acetophenone, an aromatic hydrocarbon such as benzene, toluene and xylene, an aliphatic hydrocarbon such as hexane and heptane or an alcohol such as methanol, ethanol and propanol.

In case of manufacturing the novel compound (I) according to the oxo reaction shown by the formula (A), it is possible to proceed with the reaction by charging the compound (II), the compound (III) and the catalyst in a reaction vessel and then feeding a gas mixture of hydrogen and carbon monoxide thereinto or by charging the compound (II) and the catalyst in the reaction vessel, feeding the gas mixture thereinto so as to react them and then adding the compound (III) thereto for further reaction.

In case of manufacturing the compound (V) according to the amido-carbonylation shown by the formula (B), it is possible to proceed with the reaction by concurrently feeding the compounds (I) and (IV), and the gas mixture in the reaction vessel or by adding the compound (IV) into the opened reaction vessel in which the compound (I) has been manufactured according to the above, and then feeding the gas mixture.

In case of manufacturing the compound (V) and/or the compound (VI) according to the concurrent amido-carbonylations shown by the formula (C), it is possible to proceed with the reaction by concurrently charging all of the compounds (II), (III) and (IV) into the reaction vessel or successively charging them in a desired order.

When subjecting the objective compound (V) and/or the objective compound (VI) to hydrolysis, it is possible to readily obtain a herbicidal compound (VII) as shown by a following reaction formula. 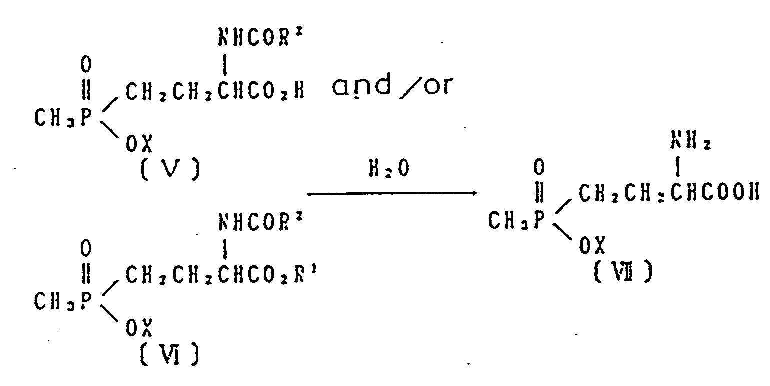
The ammonium salt of the compound (VII) is an effective component of the marketed herbicide.

The invention will be explained in more detail according to the following Examples, but it is noted that the invention is not restricted thereto.

### Example 1

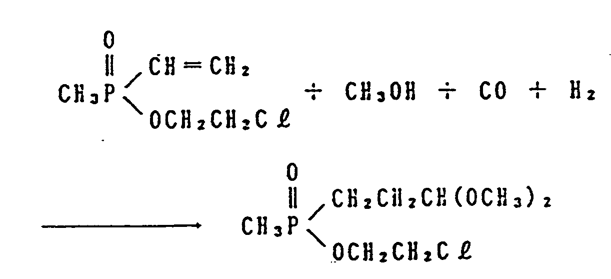

In a stainless steel autoclave of 100 ml capacity, 8.40 g (50 m mol) methylvinylphosphinic acid-2-chloroethyl ester, 50 ml methanol and 170 mg (0.5 m mol) dicobalt octacarbonyl were charged.

Air in the autoclave was substituted with the gas mixture of carbon monoxide and hydrogen (1 mol:1 mol) so as to proceed with the reaction at a temperature of 120°C and under an pressure of 9.81 x 10⁶Pa (100 kg/cm²) for 2 hours.

After cooling the autoclave, the reaction product was taken out to be analyzed by gas chromatography.

It was confirmed that methylvinylphosphinic acid-2-chloroethyl ester was converted by 100 %.

By distilling off the solvent, a liquid reaction product was obtained in the amount of 11.7 g. According to the mass spectrometry thereof, molecule ion 244 was confirmed.

As a result of the infrared absorption spectrum, strong acetal absorptions were found at 1210, 1200, 1120, 1070 and 1040 cm⁻¹. A result of the proton NMR analysis is;
¹HNMR (CDC 3)
(ppm) 1.75 - 2.10 (m, 4H)
1.51 (d, J=14 Hz, 3H), 3.33 (s, 6H) 3.70 (t, J=5 Hz, 2H), 4.13 - 4.50 (m, 3H)
It was confirmed from the above results that the reaction product was methyl-3,3′-dimethoxypropylphosphinic acid-2-chloroethyl ester. Yield; 96 %.

### Example 2

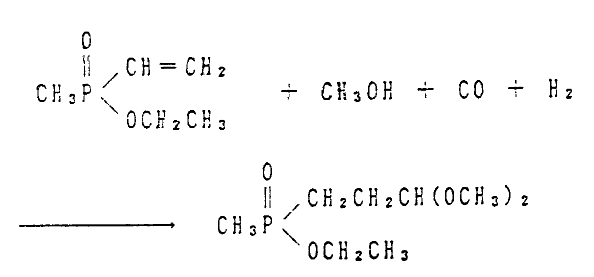

In a stainless steel autoclave of 100 ml capacity, 6.70 g (50 m mol) methylvinylphosphinic acid ethyl ester, 50 ml methanol and 170 mg (0.5 m mol) dicobalt octacarbonyl were charged.

Air in the autoclave was substituted with the gas mixture of carbon monoxide and hydrogen (1 mol: 1 mol) so as to proceed with the reaction at a temperature of 120°C and under a pressure
After cooling the autoclave, the reaction product was taken out to be analyzed by gas chromatography. It was confirmed that methylvinylphosphinic acid ethyl ester was converted by 100 %.

The reaction product was confirmed to be methyl-3,3'-dimethoxypropylphosphinic acid ethyl ester. Yield; 92.5 %.

### Example 3

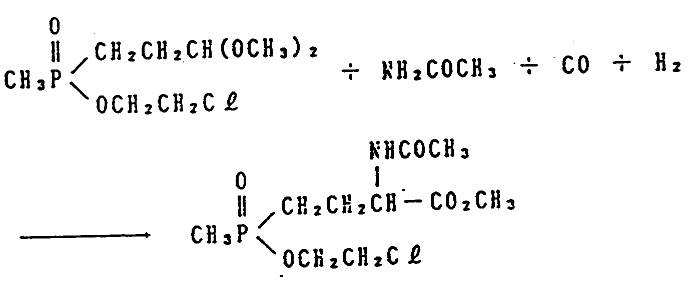

In a stainless steel autoclave of 100 ml capacity, 50 g dioxane, 12.2 g (50 m mol) methyl-3,3-' dimethoxypropylphosphinic-2-chloroethyl ester, 3.13 g (53 m mol) acetoamide and 170 mg (0.5 m mol) dicobalt octacarbonyl were charged.

Air in the autoclave was substituted with the gas mixture of hydrogen and carbon monoxide (1 mol: 1 mol) so as to proceed with the reaction at a temperature of 100°C and under a pressure of 1.96 x 10⁷pa (200 kg/cm²) for 4 hours.

After cooling the autoclave, the reaction product was taken out so as to be analyzed by gas chromatography. It was confirmed that methyl-3,3'-dimethoxypropylphosphinic acid-2-chloroethyl ester was converted by 100 %.

The reaction product was confirmed to be 2-N-acylamino-4-chloroethoxy-4-(methylphosphinyl) butyric acid methyl ester. Yield; 81 %.

### Example 4

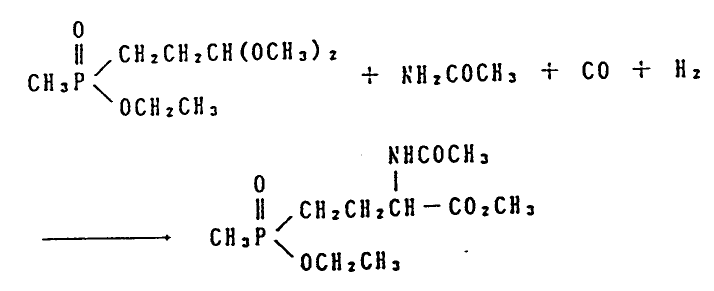

In a stainless steel autoclave of 100 ml capacity, 50 g dioxane, 10.5 g (50 m mol) methyl-3,3'-dimethoxypropylphosphinic acid ethyl ester, 3.13 g (53 m mol) acetoamide and 170 mg (0.5 m mol) dicobalt octacarbonyl were charged.

Air in the autoclave was substituted with the gas mixture of hydrogen and carbon monoxide (1 mol:1 mol) so as to proceed with the reaction at a temperature of 100°C and under a pressure of 1.96 x 10⁷Pa (200 kg/cm²) for 4 hours.

After cooling the autoclave, the reaction product was taken out to be analyzed by gas chromatography. It was confirmed that methyl-3,3'-dimethoxypropylphosphinic acid ethyl ester was converted by 100 %.

The reaction product was confirmed to be 2-N-acylamino-4-ethoxy-4-(methylphosphinyl) butyric acid methyl ester. Yeild; 73 %.

### Example 5

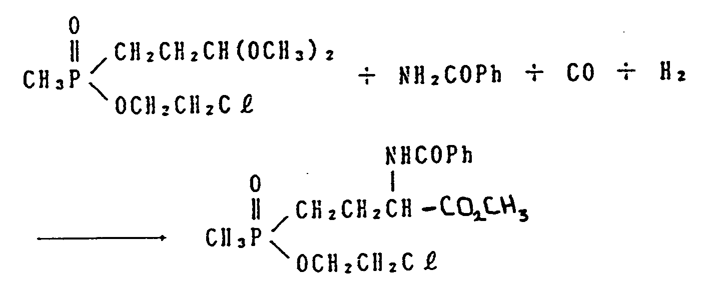

In a stainless steel autoclave of 100 ml capacity, 50 g tetrahydrofuran, 12.2 g (50 m mol) methyl-3,3-'dimethoxypropylphosphinic acid-2-chloroethyl ester, 6.65 g (55 m mol) benzamide and 510 mg (1.5 m mol) dicobalt octacarbonyl were charged.

Air in the autoclave was substituted with the gas mixture of hydrogen and carbon monoxide (1 mol:1 mol) so as to proceed with the reaction at a temperature of 120°C and under a pressure of 1.37 x 10⁷Pa (140 Kg/cm²) for 4 hours.

After cooling the autoclave, the reaction product was taken out to be analyzed by gas chromatography. It was confirmed that methyl-3,3'-dimethoxypropylphosphinic acid-2-chloroethyl ester was converted by 100 %.

The reaction product was confirmed to be 2-N-benzoylamino-4-chloroethoxy-4-(methylphosphinyl) butyric acid methyl ester. Yield; 70 %.

### Exalmple 6

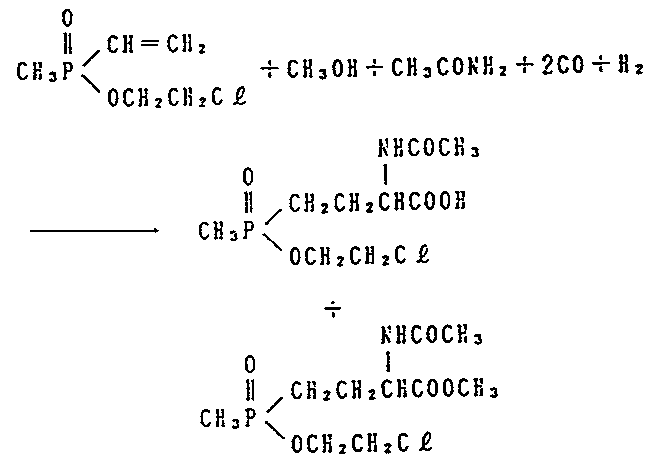

In a stainless steel autoclave of 100 ml capacity, 50 g dioxane, 8.40 g (50 m mol) methylvinylphosphinic acid-2-chloroethyl ester 8.40 g (50 m mol). 4.8g (150 m mol) methanol, 3.13 g (53 m mol) acetoamide and 170 mg (0.5 m mol) dicobalt octacarbonyl were charged.

Air in the autoclave was substituted with the gas mixture of hydrogen and carbon monoxide (1 mol:1 mol) so as to proceed with the reaction at a temperature of 100°C and under a pressure of 1.96 x 10⁷Pa (200 kg/cm²) for 4 hours.

After cooling the autoclave, the reaction product was taken out to be analyzed by gas chromatography. It was confirmed that methylvinylphosphinic acid-2-chloroethyl ester was converted by 100 %.

The reaction product was confirmed to be 2-N-acylamino-4-chloroethoxy-4-(methylphosphinyl) butyric acid methyl ester. Yield; 75 %.

The by-product, 2-N-acylamino-4-chloroethoxy-4-(methylphosphinyl) butyric acid was obtained in the yield of 15 %.

## Claims

1. Methyl-3,3'-dialkoxypropylphosphinic acid derivatives represented by the general formula (I) 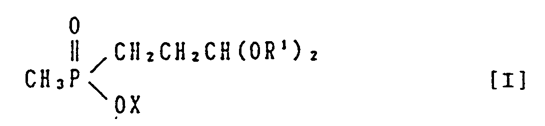 in which R¹ means an alkyl group of 1-10 carbon atoms and X means a halo-alkyl group having from 1 to 4 carbon atoms or a phenyl group.

2. The methyl-3,3'-dialkoxypropylphosphinic acid derivatives as set forth in Claim 1, in which X means 2-chloroethyl.

3. A process for manufacturing methyl-3,3'-dialkoxypropylphosphinic acid derivatives represented by the formula (I) given in Claim 1, which comprises the reaction of a compound represented by the general formula (II) 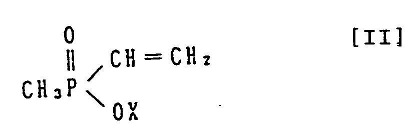 in which X means a halo-alkyl group having from 1 to 4 carbon atoms or a phenyl group, a compound represented by the general formula (III)
R¹-OH [III]
in which R¹ means an alkyl group of 1-10 carbon atoms, hydrogen and carbon monoxide, in the presence of a catalyst comprising an VIII group metal in the periodic table.

4. The process as set forth in Claim 3, in which R¹ means methyl and X means 2-chloroethyl.

5. A process for manufacturing 2-amino-4-(alkoxymethylphosphino) butyrate derivatives represented by the general formula (V) 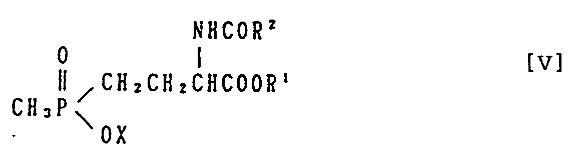 in which R¹ means an alkyl group of 1-10 carbon atoms, R² means an alkyl group comprising up to 12 carbon atoms, phenyl group, methyl substituted phenyl, trimethyl substituted phenyl, butyl substituted phenyl, methoxy substituted phenyl, cyano substituted phenyl, fluorine substituted phenyl, fluorine disubstituted phenyl, chlorine-fluorine substituted phenyl, chlorine substituted phenyl, chlorine disubstituted phenyl, bromine substituted phenyl, methyl-chlorine substituted phenyl, benzoyl substituted phenyl, naphtyl, methyl substituted phenylbutyl or benzyl, and X means an alkyl group having from 1 to 4 carbon atoms, a halo-alkyl group having from 1 to 4 carbon atoms or phenyl group, which comprises reaction of a methyl-3,3'-dialkoxypropylphosphinic acid derivative represented by the general formula (I) 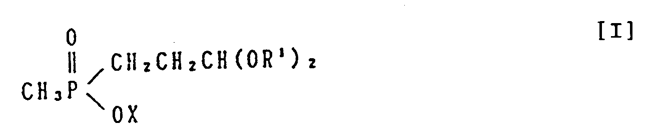 in which R¹ means an alkyl group of 1-10 carbon atoms and X means an alkyl group having from 1 to 4 carbon atoms, halo-alkyl group having from 1 to 4 carbon atoms and phenyl group, a compound represented by the general formula (IV)
NH₂COR² [IV]
in which R² is as defined above, and carbon monoxide, or hydrogen and carbon monoxide, in the presence of a catalyst comprising an VIII group metal in the periodic table.

6. The process for manufacturing 2-amino-4-(alkoxymethylphosphino) butyrate derivatives as set forth in Claim 5, in which R¹ means methyl, X means 2-chloroethyl and R² means methyl or phenyl.

7. The process for manufacturing 2-amino-4-(alkoxymethylphosphino) butyrate derivatives as set forth in Claim 5, in which R¹ means methyl, X means ethyl and R² means methyl or phenyl.

8. A process for manufacturing 2-amino-4-(alkoxymethylphosphino) butyrate derivatives represented by the general formula (V) 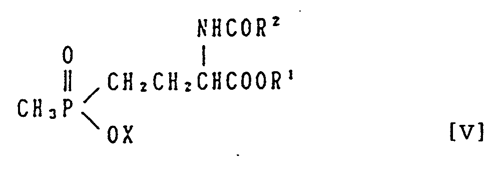 in which R¹ means an alkyl group of 1-10 carbon atoms, R² is as defined in Claim 5, and X means an alkyl group having from 1 to 4 carbon atoms, a halo-alkyl group having from 1 to 4 carbon atoms or phenyl group, and/or 2-amino-4-(alkoxymethylphosphino) butyric acid derivatives represented by the general formula (VI) 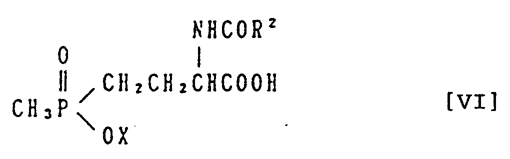 in which R² is as defined in Claim 5, and X means an alkyl group having from 1 to 4 carbon atoms, halo-alkyl group having from 1 to 4 carbon atoms, or phenyl group, which comprises reaction of a compound represented by the general formula (II) 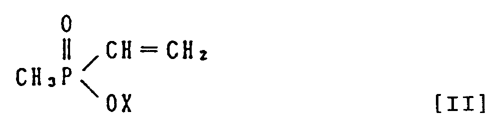 in which X means an alkyl group having from 1 to 4 carbon atoms, a halo-alkyl group having from 1 to 4 carbon atoms or phenyl group, a compound represented by the general formula (III)
R¹-OH [III]
in which R1 means an alkyl group of 1-10 carbon atoms, a compound represented by the general formula (IV)
NH₂COR² [IV]
in which R² is as defined in Claim 5, hydrogen and carbon monoxide, in the presence of a catalyst comprising an VIII group metal in the periodic table.

9. The process for manufacturing 2-amino-4-alkoxymethylphosphino) butyrate derivatives and/or 2-amino-4-(alkoxymethylphosphino) butyric acid derivatives as set forth in Claim 8, in which R¹ means methyl, X means 2-chloroethyl and R² means methyl.

10. The process for manufacturing 2-amino-4-(alkoxymethylphosphino) butyrate derivatives and/or 2-amino-4-(alkoxymethylphosphino) butyric acid derivatives as set forth in Claim 8, in which R¹ means methyl, X means ethyl and R² means methyl.

## Patentansprüche

1. Methyl-3,3'-dialkoxypropylphosphinsäure-Derivate, dargestellt durch die allgemeine Formel (I) 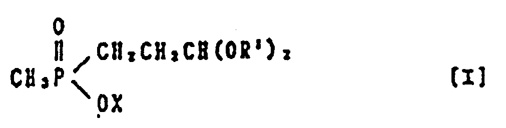 wobei R¹ eine Alkylgruppe mit 1 bis 10 Kohlenstoffatomen und X eine Halogen-Alkylgruppe mit 1 bis 4 Kohlenstoffatomen oder eine Phenylgruppe bedeuten.

2. Die Methyl-3,3'-dialkoxypropylphosphinsäure-Derivate nach Anspruch 1, wobei X 2-Chlorethyl bedeutet.

3. Verfahren zur Herstellung von Methyl-3,3'-dialkoxypropylphosphinsäure-Derivaten, dargestellt durch die in Anspruch 1 angegebene Formel (I), das die Reaktion einer durch die allgemeine Formel (II) dargestellten Verbindung 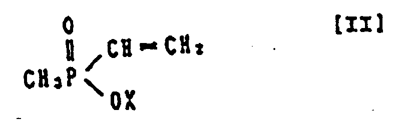 wobei X eine Halogen-Alkylgruppe mit 1 bis 4 Kohlenstoffatomen oder eine Phenylgruppe bedeutet, einer durch die allgemeine Formel (II) dargestellten Verbindung
R¹-OH [III]
wobei R¹ eine Alkylgruppe mit 1 bis 10 Kohlenstoffatomen bedeutet, von Wasserstoff und Kohlenmonoxid in Gegenwart eines ein Metall der Gruppe VIII im Periodensystem enthaltenden Katalysators umfaßt.

4. Das Verfahren nach Anspruch 3, wobei R¹ Methyl und X 2-Chlorethyl bedeuten.

5. Verfahren zur Herstellung von 2-Amino-4-(alkoxymethylphosphino)butyrat-Derivaten, dargestellt durch die allgemeine Formel (V), 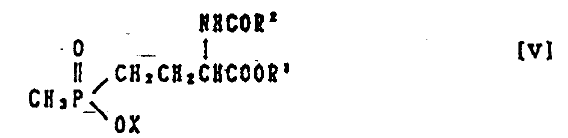 wobei R¹ eine Alkylgruppe mit 1 bis 10 Kohlenstoffatomen, R² eine bis zu 12 Kohlenstoffatome enthaltende Alkylgruppe, eine Phenylgruppe, Methyl-substituiertes Phenyl, Trimethyl-substituiertes Phenyl, Butyl-substituiertes Phenyl, Methoxy-substituiertes Phenyl, Cyano-substituiertes Phenyl, Fluor-substituiertes Phenyl, Fluor-disubstituiertes Phenyl, Chlor-Fluor-substituiertes Phenyl, Chlor-substituiertes Phenyl, Chlor-disubstituiertes Phenyl, Brom-substituiertes Phenyl, Methyl-Chlor-substituiertes Phenyl, Benzoyl-substituiertes Phenyl, Naphthyl, Methyl-substituiertes Phenylbutyl oder Benzyl und X eine Alkylgruppe mit 1 bis 4 Kohlenstoffatomen, eine Halogen-Alkylgruppe mit 1 bis 4 Kohlenstoffatomen oder eine Phenylgruppe bedeuten, wobei das Verfahren die Reaktion eines Methyl-3,3'-dialkoxypropylphosphinsäure-Derivates, dargestellt durch die allgemeine Formel (I) 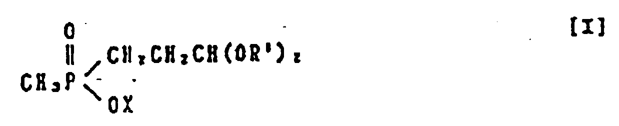 wobei R¹ eine Alkylgruppe mit 1 bis 10 Kohlenstoffatomen und X eine Alkylgruppe mit 1 bis 4 Kohlenstoffatomen, eine Halogen-Alkylgruppe mit 1 bis 4 Kohlenstoffatomen oder eine Phenylgruppe bedeuten, einer durch die allgemeine Formel (IV) dargestellten Verbindung
NR₂COR² [IV]
wobei R² wie oben definiert ist, und von Kohlenmonoxid, oder von Wasserstoff und Kohlenmonoxid, in Gegenwart eines ein Metall der Gruppe VIII im Periodensystem enthaltenden Katalysators umfaßt.

6. Das Verfahren zur Herstellung von 2-Amino-4-(alkoxymethylphosphino)butyrat-Derivaten nach Anspruch 5, wobei R Methyl, X 2-Chlorethyl und R² Methyl oder Phenyl bedeuten.

7. Das Verfahren zur Herstellung von 2-Amino-4-(alkoxymethylphosphino)butyrat-Derivaten nach Anspruch 5, wobei R Methyl, X Ethyl und R² Methyl oder Phenyl bedeuten.

8. Verfahren zur Herstellung von 2-Amino-4-(alkoxymethylphosphino)butyrat-Derivaten, dargestellt durch die allgemeine Formel (V) 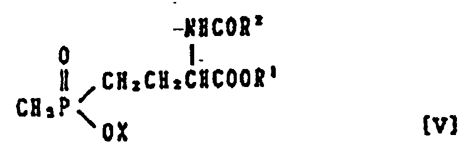 wobei R¹ eine Alkylgruppe mit 1 bis 10 Kohlenstoffatomen bedeutet, R² wie in Anspruch 5 definiert ist und X eine Alkylgruppe mit 1 bis 4 Kohlenstoffatomen, eine Halogen-Alkylgruppe mit 1 bis 4 Kohlenstoffatomen oder eine Phenylgruppe bedeutet, und/oder zur Herstellung von 2-Amino-4-(alkoxymethylphosphino)buttersäure-Derivaten, dargestellt durch die allgemeine Formel (VI) 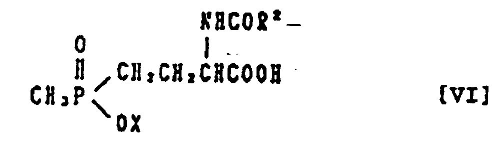 wobei R² wie in Anspruch 5 definiert ist und X eine Alkylgruppe mit 1 bis 4 Kohlenstoffatomen, eine Halogen-Alkylgruppe mit 1 bis 4 Kohlenstoffatomen oder eine Phenylgruppe bedeutet, wobei das Verfahren die Reaktion einer durch die allgemeine Formel (II) dargestellten Verbindung 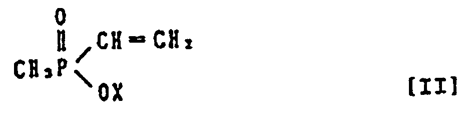 wobei X eine Alkylgruppe mit 1 bis 4 Kohlenstoffatomen, eine Halogen-Alkylgruppe mit 1 bis 4 Kohlenstoffatomen oder eine Phenylgruppe bedeutet, einer durch die allgemeine Formel (III) dargestellten Verbindung
R¹-OH [III]
wobei R¹ eine Alkylgruppe mit 1 bis 10 Kohlenstoffatomen bedeutet, einer durch die allgemeine Formel (IV) dargestellten Verbindung
NH₂COR² [IV]
wobei R² wie in Anspruch 5 definiert ist, von Wasserstoff und Kohlenmonoxid in Gegenwart eines ein Metall der Gruppe VIII im Periodensystem enthaltenden Katalysators umfaßt.

9. Das Verfahren zur Herstellung von 2-Amino-4-(alkoxymethylphosphino)butyrat-Derivaten und/oder 2-Amino-4-(alkoxymethylphosphino)buttersäure-Derivaten nach Anspruch 8, wobei R¹ Methyl, X 2-Chlorethyl und R² Methyl bedeuten.

10. Das Verfahren zur Herstellung von 2-Amino-4-(alkoxymethylphosphino)butyrat-Derivaten und/oder 2-Amino-4-(alkoxymethylphosphino)buttersäure-Derivaten nach Anspruch 8, wobei R¹ Methyl, X Ethyl und R² Methyl bedeuten.

## Revendications

1. Dérivés d'acides méthyl-3,3'-dialcoxypropylphosphiniques représentés par la formule générale (I) 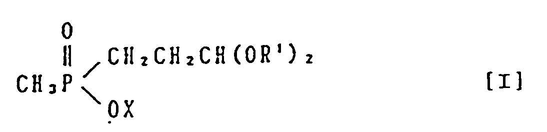 dans laquelle R¹ représente un groupe alkyle de 1 à 10 atomes de carbone et X représente un groupe halogénalkyle ayant 1 à 4 atomes de carbone ou un groupe phényle.

2. Dérivés d'acides méthyl-3,3'-dialcoxypropylphosphiniques selon la revendication 1, dans lesquels X représente le groupe 2-chloréthyle.

3. Procédé pour préparer les dérivés d'acides méthyl-3,3'-dialcoxypropylphosphiniques représentés par la formule (I) donnée dans la revendication 1, qui comprend la réaction d'un composé représenté par la formule générale (II) 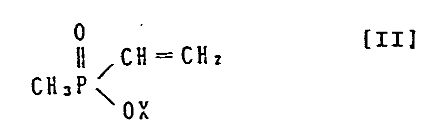 dans laquelle X représente un groupe halogénalkyle ayant 1 à 4 atomes de carbone ou un groupe phényle, d'un composé représenté par la formule générale (III)
R¹-OH [III]
dans laquelle R¹ représente un groupe alkyle de 1 à 10 atomes de carbone, d'hydrogène et d'oxyde de carbone, en présence d'un catalyseur comprenant un métal du Groupe VIII du Tableau Périodique.

4. Procédé selon la revendication 3, dans lequel R¹ représente le groupe méthyle et X représente le groupe 2-chloréthyle.

5. Procédé pour préparer des dérivés de 2-amino-4-(alcoxyméthylphosphino)butyrates représentés par la formule générale (V) 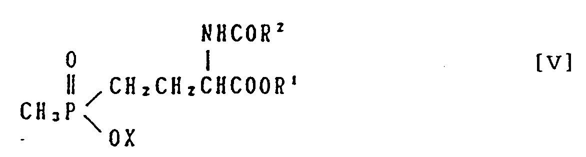 dans laquelle R¹ représente un groupe alkyle de 1 à 10 atomes de carbone, R² représente un groupe alkyle ayant jusqu'à 12 atomes de carbone, un groupe phényle, méthylphényle, triméthylphényle, butylphényle, méthoxyphényle, cyanophényle, fluorophényle, difluorophényle, chlorofluorophényle, chlorophényle, dichlorophényle, bromophényle, méthylchlorophényle, benzoylphényle, naphtyle, méthylphénylbutyle ou benzyle, et X représente un groupe alkyle ayant 1 à 4 atomes de carbone, un groupe halogénalkyle ayant 1 à 4 atomes de carbone ou un groupe phényle, qui comprend la réaction d'un dérivé d'acide méthyl-3,3'-dialcoxypropylphosphinique représenté par la formule générale (I) 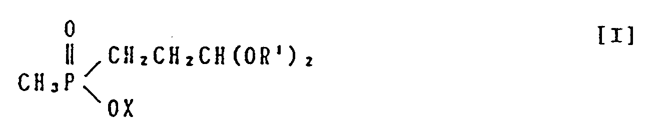 dans laquelle R¹ représente un groupe alkyle de 1 à 10 atomes de carbone et X représente un groupe alkyle ayant 1 à 4 atomes de carbone, un groupe halogénalkyle ayant 1 à 4 atomes de carbone ou un groupe phényle, d'un composé représenté par la formule générale (IV)
NH₂COR² [IV]
dans laquelle R² est tel que défini ci-dessus, et d'oxyde de carbone, ou d'hydrogène et d'oxyde de carbone, en présence d'un catalyseur comprenant un métal du Groupe VIII du Tableau Périodique.

6. Procédé pour préparer des dérivés de 2-amino-4-(alcoxyméthylphosphino)butyrates selon la revendication 5, dans lequel R¹ représente le groupe méthyle, X représente le groupe 2-chloréthyle et R² représente le groupe méthyle ou phényle.

7. Procédé pour préparer des dérivés de 2-amino-4-(alcoxyméthylphosphino)butyrates selon la revendication 5, dans lequel R¹ représente le groupe méthyle, X représente le groupe éthyle et R² représente le groupe méthyle ou phényle.

8. Procédé pour préparer des dérivés de 2-amino-4-(alcoxyméthylphosphino)butyrates représentés par la formule générale (V) 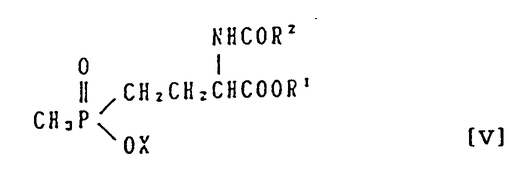 dans laquelle R¹ représente un groupe alkyle de 1 à 10 atomes de carbone, R² est tel que défini dans la revendication 5 et X représente un groupe alkyle ayant 1 à 4 atomes de carbone, un groupe halogénalkyle ayant 1 à 4 atomes de carbone ou un groupe phényle, et/ou des dérivés d'acides 2-amino-4-(alcoxyméthylphosphino)butyriques représentés par la formule générale (VI) 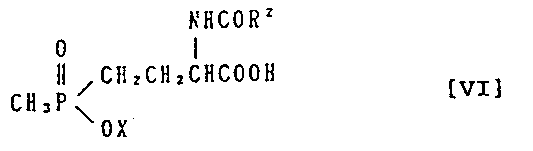 dans laquelle R² est tel que défini dans la revendication 5 et X représente un groupe alkyle ayant 1 à 4 atomes de carbone, un groupe halogénalkyle ayant 1 à 4 atomes de carbone ou un groupe phényle, qui comprend la réaction d'un composé représenté par la formule générale (II) 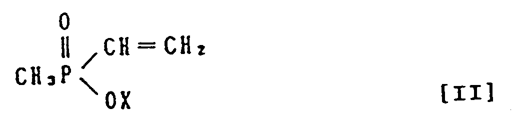 dans laquelle X représente un groupe alkyle ayant 1 à 4 atomes de carbone, un groupe halogénalkyle ayant 1 à 4 atomes de carbone ou un groupe phényle, d'un composé représenté par la formule générale (III)
R¹-OH [III]
dans laquelle R¹ représente un groupe alkyle de 1 à 10 atomes de carbone, d'un composé représenté par la formule générale (IV)
NH₂COR² [IV]
dans laquelle R² est tel que défini dans la revendication 5, de l'hydrogène et de l'oxyde de carbone, en présence d'un catalyseur comprenant un métal du Groupe VIII du Tableau Périodique.

9. Procédé pour préparer des dérivés de 2-amino-4-(alcoxyméthylphosphino)butyrates et/ou des dérivés d'acides 2-amino-4-(alcoxyméthylphosphino)butyriques selon la revendication 8, dans lequel R¹ représente le groupe méthyle, X représente le groupe 2-chloréthyle et R² représente le groupe méthyle.

10. Procédé pour préparer des dérivés de 2-amino-4-(alcoxyméthylphosphino)butyrates et/ou des dérivés d'acides 2-amino-4-(alcoxyméthylphosphino)butyriques selon la revendication 8, dans lequel R¹ représente le groupe méthyle, X représente le groupe éthyle et R² représente le groupe méthyle.
